# EUROPEAN PATENT APPLICATION

(11) **EP 3 955 602 A1**
(43) Date of publication of application: **16.02.2022**
(21) Application number: 20798706.6
(22) Date of filing: 27.04.2020
(51) Int. Cl.: H04W 4/40

(54) **RESOURCE SCHEDULING METHOD AND APPARATUS**

(30) Priority: 30.04.2019 CN 201910365459
(71) Applicant: Huawei Technologies Co., Ltd., Shenzhen, Guangdong 518129 (CN)
(72) Inventor: YU, Chang, Shenzhen, Guangdong 518129 (CN); CHANG, Junren, Shenzhen, Guangdong 518129 (CN)
(74) Representative: Gill Jennings & Every LLP
(86) International application number: PCT/CN2020/087282
(87) International publication number: WO 2020/221212

(57) **Abstract**

Embodiments of this application relate to the field of communications technologies, and provide a resource scheduling method and an apparatus, to reduce a data transmission delay of a service on a sidelink when a mode of a terminal is reconfigured. The method includes: A terminal triggers a resource scheduling request when the terminal meets a first trigger condition, where the resource scheduling request is used to request an access network device to allocate an uplink resource or a sidelink resource to the terminal; and the first trigger condition includes: A working mode of the terminal or a working mode of a sidelink service of the terminal is switched from a first mode to a second mode, where the first mode is different from the second mode, and the first mode and the second mode each are one of the following modes: a scheduling mode and a scheduling and autonomous joint mode.

## Description

This application claims priority to Chinese Patent Application No. 201910365459.4, filed with the China National Intellectual Property Administration on April 30, 2019 and entitled "RESOURCE SCHEDULING METHOD AND APPARATUS", which is incorporated herein by reference in its entirety.

### TECHNICAL FIELD

This application relates to the field of communications technologies, and in particular, to a resource scheduling method and an apparatus.

### BACKGROUND

Vehicle to everything (Vehicle To Everything, V2X) provides vehicle information by using a vehicle-mounted sensor, a vehicle-mounted terminal, and the like, and implements vehicle to vehicle (vehicle to vehicle, V2V) communication, vehicle to pedestrian (vehicle to pedestrian, V2P) communication, and vehicle to infrastructure (vehicle to infrastructure, V2I) communication by using various communications technologies.

In long term evolution (long term evolution, LTE) V2X communication, a terminal may perform V2X communication in a scheduling mode or an autonomous mode. In the scheduling mode, the terminal may trigger a buffer status report (Buffer Status Report, BSR) of a sidelink (Sidelink), and report the BSR of the sidelink to a base station by using an uplink resource, so that the base station allocates a sidelink resource based on the reported BSR. In the autonomous mode, the terminal may autonomously select a sidelink resource by sensing all resources in a resource pool.

In new radio (New Radio, NR) V2X communication, a working mode of the terminal may alternatively be a scheduling and autonomous joint mode in addition to the scheduling mode or the autonomous mode. In the scheduling and autonomous joint mode, when obtaining a sidelink resource, the terminal may obtain a part of the resource in the scheduling mode, and obtain the other part of the resource in the autonomous mode. In this case, when the working mode of the terminal is reconfigured, how to trigger the terminal to obtain the sidelink resource is still an urgent problem to be resolved.

### SUMMARY

This application provides a resource scheduling method and an apparatus, to resolve a conventional-technology problem that a terminal cannot obtain a sidelink resource when a mode of the terminal is reconfigured. This application can reduce a data transmission delay of a service on a sidelink of the terminal.

To achieve the foregoing objective, the following technical solutions are used in this application.

According to a first aspect, a resource scheduling method is provided. The method includes: A terminal triggers a resource scheduling request when the terminal meets a first trigger condition. The resource scheduling request is used to request an access network device to allocate an uplink resource or a sidelink resource to the terminal. The first trigger condition includes: A working mode of the terminal or a working mode of a sidelink service of the terminal is switched from a first mode to a second mode, where the first mode is different from the second mode, and the first mode and the second mode each are one of the following modes: a scheduling mode and a scheduling and autonomous joint mode. To be specific, the working mode is switched from the scheduling mode to the scheduling and autonomous joint mode, or is switched from the scheduling and autonomous joint mode to the scheduling mode. Further, when the terminal has a resource available for sending the resource scheduling request, the terminal sends the resource scheduling request to the access network device.

In the foregoing technical solution, when the terminal meets the first trigger condition, the terminal triggers the resource scheduling request, and may send the resource scheduling request to the access network device, that is, send a resource scheduling requirement of the terminal to the access network device. The access network device may properly allocate the uplink resource used to request the sidelink resource or the sidelink resource to the terminal based on the resource scheduling request. This resolves a problem of how the terminal obtains the sidelink resource when the mode of the terminal is reconfigured. In addition, after obtaining the sidelink resource, the terminal may transmit sidelink data by using the sidelink resource. This reduces a transmission delay of a service on a sidelink.

In a possible implementation of the first aspect, the first trigger condition further includes: The terminal has no new data, to be specific, after the mode is switched from the first mode to the second mode, the terminal generates no available data that needs to be transmitted on the sidelink. The available data may also be referred to as valid data.

Alternatively, the first trigger condition further includes: The terminal has new data corresponding to a first sidelink logical channel, where a priority of the first sidelink logical channel is lower than or equal to a priority of a second sidelink logical channel, and the second sidelink logical channel is a sidelink logical channel corresponding to first data in available data of the terminal. Optionally, the first data is data other than the new data in the available data; the first data is data that is other than the new data in the available data and that is corresponding to a same target identifier as the new data; or the first data is data that is other than the new data in the available data and that is corresponding to a same sidelink logical channel group as the new data.

In a possible implementation of the first aspect, the sidelink service includes any one or more of the following: a sidelink quality of service flow, a sidelink logical channel LCH, a sidelink data radio bearer DRB, a sidelink logical channel group LCG, a sidelink service target identifier, and a sidelink packet data unit session.

In a possible implementation of the first aspect, the first trigger condition further includes: A sidelink logical channel that supports the scheduling mode exists in a sidelink logical channel corresponding to the available data of the terminal, or a service corresponding to the available data of the terminal supports the scheduling mode. In the foregoing possible implementations, other conditions for triggering the resource scheduling request by the terminal are further limited, so that accuracy of sending the resource scheduling request to the access network device by the terminal can be improved.

In a possible implementation of the first aspect, the access network device may reconfigure the working mode of the terminal in a manner of dedicated signaling, or the like.

In a possible implementation of the first aspect, the resource scheduling request is a sidelink buffer status report, and the sidelink buffer status report is used to request the access network device to allocate the sidelink resource to the terminal. In the foregoing possible implementation, the terminal may request, by using the sidelink buffer status report, the access network device to allocate the sidelink resource to the terminal, so that the terminal may transmit the sidelink data by using the sidelink resource. This reduces the transmission delay of the service on the sidelink.

In a possible implementation of the first aspect, the sidelink buffer status report is triggered by a third sidelink logical channel that meets a first preset condition in a plurality of sidelink logical channels corresponding to the available data. Optionally, the first preset condition includes: The third sidelink logical channel supports the scheduling mode, and/or a priority of the third sidelink logical channel is higher than a priority of another sidelink logical channel that supports the scheduling mode in the plurality of sidelink logical channels; or the third sidelink logical channel is a sidelink logical channel whose working mode is switched from the first mode to the second mode in the plurality of sidelink logical channels. In the foregoing possible implementation, the sidelink buffer status report is triggered by the third sidelink logical channel that meets a specific condition, so that accuracy of triggering the buffer status report by the terminal can be improved.

In a possible implementation of the first aspect, the method further includes: The terminal triggers a first scheduling request, where the first scheduling request is used to request the access network device to allocate, to the terminal, an uplink resource used to send the sidelink buffer status report. A type of the sidelink buffer status report is a regular buffer status report. Further, when the terminal has a scheduling request resource used to send the first scheduling request, the terminal sends the first scheduling request to the access network device. In the foregoing possible implementation, when the terminal has no uplink resource used to send the sidelink buffer status report, the terminal triggers the first scheduling request, and requests the uplink resource by sending the first scheduling request. After the terminal obtains the uplink resource allocated by a network, the terminal sends the sidelink buffer status reports by using the uplink resource.

In a possible implementation of the first aspect, the resource scheduling request is a second scheduling request, and the second scheduling request is used to request the access network device to allocate the uplink resource to the terminal. In the foregoing possible implementation, the terminal obtains the uplink resource by using the second scheduling request, so that the terminal may send the sidelink buffer status report on the uplink resource, to obtain the sidelink resource, and further transmit the sidelink data by using the sidelink resource. This reduces the transmission delay of the service on the sidelink.

According to a second aspect, a resource scheduling apparatus is provided. The apparatus includes: a processing unit, configured to trigger a resource scheduling request when a first trigger condition is met. The resource scheduling request is used to request an access network device to allocate an uplink resource or a sidelink resource to the apparatus. The first trigger condition includes: A working mode of the apparatus or a working mode of a sidelink service of the apparatus is switched from a first mode to a second mode, where the first mode is different from the second mode, and the first mode and the second mode each are one of the following modes: a scheduling mode and a scheduling and autonomous joint mode. The apparatus further includes: a sending unit, configured to send the resource scheduling request to the access network device when the apparatus has a resource available for sending the resource scheduling request.

In a possible implementation of the second aspect, the first trigger condition further includes: The apparatus has no new data, to be specific, after the mode is switched from the first mode to the second mode, the apparatus generates no available data that needs to be transmitted on a sidelink. The available data may also be referred to as valid data.

Alternatively, a second trigger condition further includes: The apparatus has new data corresponding to a first sidelink logical channel, where a priority of the first sidelink logical channel is lower than or equal to a priority of a second sidelink logical channel, and the second sidelink logical channel is a sidelink logical channel corresponding to first data in available data of the apparatus. Optionally, the first data is data other than the new data in the available data; the first data is data that is other than the new data in the available data and that is corresponding to a same target identifier as the new data; or the first data is data that is other than the new data in the available data and that is corresponding to a same sidelink logical channel group as the new data.

In a possible implementation of the second aspect, the sidelink service includes any one or more of the following: a sidelink quality of service flow, a sidelink logical channel LCH, a sidelink data radio bearer DRB, a sidelink logical channel group LCG, a sidelink service target identifier, and a sidelink packet data unit session.

In a possible implementation of the second aspect, the first trigger condition further includes: A sidelink logical channel that supports the scheduling mode exists in a sidelink logical channel corresponding to the available data of the apparatus, or a service corresponding to the available data of the apparatus supports the scheduling mode.

In a possible implementation of the second aspect, the resource scheduling request is a sidelink buffer status report, and the sidelink buffer status report is used to request the access network device to allocate the sidelink resource to the apparatus.

In a possible implementation of the second aspect, the sidelink buffer status report is triggered by a third sidelink logical channel that meets a first preset condition in a plurality of sidelink logical channels corresponding to the available data of the apparatus. Optionally, the first preset condition includes: The third sidelink logical channel supports the scheduling mode, and/or a priority of the third sidelink logical channel is higher than a priority of another sidelink logical channel that supports the scheduling mode in the plurality of sidelink logical channels; or the third sidelink logical channel is a sidelink logical channel whose working mode is switched from the first mode to the second mode in the plurality of sidelink logical channels.

In a possible implementation of the second aspect, the processing unit is further configured to trigger a first scheduling request, where the first scheduling request is used to request the access network device to allocate, to the apparatus, an uplink resource used to send the sidelink buffer status report. A type of the buffer status report is a regular buffer status report. The sending unit is further configured to send the first scheduling request to the access network device when the apparatus has a scheduling request resource used to send the first scheduling request.

In a possible implementation of the second aspect, the resource scheduling request is a second scheduling request, and the second scheduling request is used to request the access network device to allocate the uplink resource to the apparatus. The uplink resource is used to send the sidelink buffer status report.

According to still another aspect of this application, a resource scheduling apparatus is provided. The apparatus is a terminal or a chip built in the terminal, and the apparatus includes a processor and a memory. The memory stores program instructions of the apparatus, and the processor is configured to run the program instructions in the memory, so that the apparatus is enabled to perform the resource scheduling method according to any one of the first aspect or the possible implementations of the first aspect.

According to still another aspect of this application, a computer-readable storage medium is provided. The computer-readable storage medium stores instructions, and when the instructions are run on a device, the device is enabled to perform the resource scheduling method according to any one of the first aspect or the possible implementations of the first aspect.

According to still another aspect of this application, a computer program product is provided. When the computer program product runs on a device, the device is enabled to perform the resource scheduling method according to any one of the first aspect or the possible implementations of the first aspect.

It may be understood that any one of the resource scheduling apparatus, the computer-readable storage medium, or the computer program product that is provided above is configured to perform the corresponding method provided above. Therefore, for beneficial effects of the resource scheduling apparatus, the computer storage medium, or the computer program product, refer to beneficial effects in the corresponding method provided above. Details are not described herein again.

### BRIEF DESCRIPTION OF DRAWINGS

FIG. 1 is a schematic diagram of a structure of a communication system according to an embodiment of this application;
FIG. 2 is a method flowchart 1 of a resource scheduling method according to an embodiment of this application;
FIG. 3 is a method flowchart 2 of a resource scheduling method according to an embodiment of this application;
FIG. 4 is a method flowchart 3 of a resource scheduling method according to an embodiment of this application;
FIG. 5 is a schematic diagram 1 of a structure of a resource scheduling apparatus according to an embodiment of this application; and
FIG. 6 is a schematic diagram 2 of a structure of a resource scheduling apparatus according to an embodiment of this application.

### DESCRIPTION OF EMBODIMENTS

In this application, "at least one" means one or more, and "a plurality of' means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" usually represents an "or" relationship between the associated objects. "At least one of the following items (pieces)" or a similar expression thereof means any combination of these items, including any combination of singular items (pieces) or plural items (pieces). For example, at least one (piece) of a, b, or c may represent a, b, c, a and b, a and c, b and c, or a, b, and c, where a, b, and c may be in a singular or plural form. In addition, in the embodiments of this application, terms such as "first" and "second" are used to distinguish between same objects or similar objects whose functions and purposes are basically the same. For example, a first threshold and a second threshold are merely intended to distinguish between different thresholds, and do not limit a sequence of the first threshold and the second threshold. A person skilled in the art may understand that the terms such as "first" and "second" do not constitute a limitation on a quantity or an execution sequence.

It should be noted that, in this application, a term such as "example" or "for example" is used to indicate an example, an illustration, or a description. Any embodiment or design solution described as an "example" or "for example" in this application should not be explained as being more preferred or having more advantages than another embodiment or design solution. Exactly, use of the word such as "example" or "for example" is intended to present a related concept in a specific manner.

The technical solutions in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a public land mobile network (public land mobile network, PLMN) system, and a future 5G communication system. The technical solutions of this application may include a plurality of application scenarios, for example, machine to machine (machine to machine, M2M), device to machine (device to machine, D2M), device to device (device to device, D2D), macro-micro communication, enhanced mobile internet (enhanced mobile broadband, eMBB), ultra-reliable low-latency communication (ultra-reliable low-latency communication, URLLC), and massive machine-type communications (massive machine-type communication, mMTC).

A network architecture and a service scenario described in the embodiments of this application are intended to describe the technical solutions in the embodiments of this application more clearly, but do not constitute a limitation on the technical solutions provided in the embodiments of this application. A person of ordinary skill in the art may learn that with evolution of the network architecture and emergence of a new service scenario, the technical solutions provided in the embodiments of this application are also applicable to similar technical problems. The embodiments of this application are described by using an example in which a provided method is applied to a new radio (New Radio, NR) system or a 5G network.

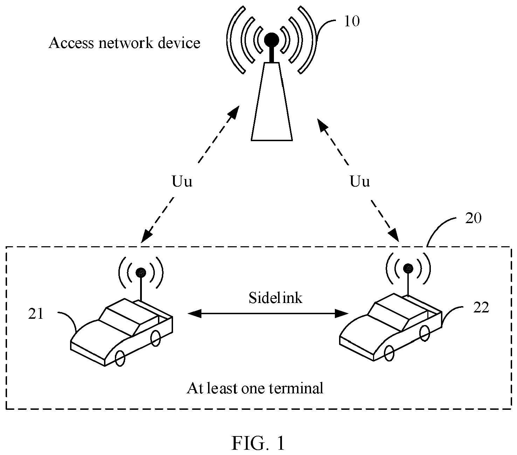

FIG. 1 is a schematic diagram of a structure of a communication system according to an embodiment of this application. Refer to FIG. 1. The communication system includes an access network device 10 and at least two terminals 20. The access network device 10 may communicate with the at least two terminals 20, and the at least two terminals 20 may also communicate with each other. In FIG. 1, that the at least two terminals 20 are vehicles and the at least two terminals 20 include a terminal 21 and a terminal 22 is used as an example for description. Both the terminal 21 and the terminal 22 may communicate with the access network 10, and the terminal 21 may also communicate with the terminal 22.

It should be noted that the communication system shown in FIG. 1 may further include a core network. The access network device 10 may be connected to the core network. The core network may be a 4G core network (for example, an evolved packet core (Evolved Packet Core, EPC)), a 5G core network (5G Core, 5GC), or a core network in a future communication system.

An example in which the core network may be a 4G core network is used. The access network device 10 may be an evolved NodeB (evolved NodeB, eNB or eNodeB) in a 4G system. The terminal 21 may be a terminal that performs information transmission with the eNB. The eNB accesses the EPC network through an S 1 interface.

An example in which the core network may be a 5G core network is used. The access network device 10 may be a next generation NodeB (The Next Generation NodeB, gNB) in an NR system, and the terminal 21 may be a terminal that performs information transmission with the gNB. The gNB accesses the 5GC through an NG interface.

Certainly, the access network device 10 may alternatively be a 3rd generation partnership project (3rd generation partnership project, 3 GPP) protocol base station, or may be a non-3 GPP protocol base station.

There is a first transmission link between the access network device 10 and the terminal 21 or the terminal 22. For example, the first transmission link may be a Uu link. There is a second transmission link between the terminal 21 and the terminal 22. For example, the second transmission link may be a sidelink (Sidelink, SL).

The terminal 21 and the terminal 22 may transmit a V2X service to each other on the sidelink, where the V2X service may also be referred to as sidelink information. The terminal 21 or the terminal 22 may transmit an uplink (Uplink, UL) Uu service to the access network device 10 on the Uu link, or may receive, on the Uu link, a downlink (Downlink, DL) Uu service sent by the access network device 10.

For example, the terminal 21 receives, on the Uu link, a sidelink resource allocated by the access network device 10 to the terminal 21; the terminal 21 requests, from the access network device 10 on the Uu link, an uplink resource for sending a buffer status report (Buffer Status Report, BSR); or the terminal 21 sends a scheduling request (Scheduling Request, SR) to the access network device 10 on the Uu link.

A direct communication interface between the terminal 21 and the terminal 22 may be an interface 1. For example, the interface 1 may be referred to as a PC5 interface, and uses a frequency band (for example, 5.9 GHz) dedicated in the vehicle to everything. An interface between the terminal 21 and the access network device 10 may be referred to as an interface 2 (for example, a Uu interface), and uses a cellular network frequency band (for example, 1.8 GHz). Names of the interface 1 and the interface 2 are merely examples. The names of the interface 1 and the interface 2 are not limited in this embodiment of this application.

The terminal 21 or the terminal 22 may be a device having a wireless communication function. The terminal 21 or the terminal 22 may be deployed on land, including an indoor or outdoor device, a handheld device, or a vehicle-mounted device; may be deployed on water (for example, on a ship); or may be deployed in the air (for example, on an airplane, a balloon, or a satellite). The terminal is also referred to as user equipment (user equipment, UE), a mobile station (mobile station, MS), a mobile terminal (mobile terminal, MT), a terminal device, or the like, and is a device that provides voice and/or data connectivity for a user. For example, the terminal includes a handheld device or a vehicle-mounted device having a wireless connection function. Currently, the terminal may be a mobile phone (mobile phone), a tablet computer, a notebook computer, a palmtop computer, a mobile internet device (mobile internet device, MID), a wearable device (such as a smartwatch, a smart band, or a pedometer), a vehicle-mounted device (such as a car, a bicycle, an electric vehicle, an airplane, a ship, a train, or a high-speed train), a virtual reality (virtual reality, VR) device, an augmented reality (augmented reality, AR) device, a wireless terminal in industrial control (industrial control), a smart home device (such as a refrigerator, a television, an air conditioner, or an electricity meter), an intelligent robot, a workshop device, a wireless terminal in self-driving (self-driving), a wireless terminal in a remote surgery (remote surgery), a wireless terminal in a smart grid (smart grid), a wireless terminal in transportation safety (transportation safety), a wireless terminal in a smart city (smart city), a wireless terminal in a smart home (smart home), a flight device (such as an intelligent robot, a hot balloon, an uncrewed aerial vehicle, or an airplane), or the like. In a possible application scenario of this application, the terminal is a terminal device that often operates on land, for example, a vehicle-mounted device. In this application, for ease of description, a chip deployed in the foregoing device, for example, a system-on-a-chip (System-On-a-Chip, SOC), a baseband chip, or another chip having a communication function, may also be referred to as a terminal.

The terminal 21 or the terminal 22 may be a vehicle having a corresponding communication function, or a vehicle-mounted communication apparatus, or another embedded communication apparatus; or may be a handheld communication device of a user, including a mobile phone, a tablet computer, or the like.

For example, in this embodiment of this application, the terminal 21 or the terminal 22 may alternatively include a wearable device. The wearable device may also be referred to as a wearable intelligent device, and is a general term for wearable devices such as glasses, gloves, watches, clothes, and shoes that are developed by applying wearable technologies in intelligent designs of daily wear. The wearable device is a portable device that is directly worn on a body or integrated into clothes or an accessory of the user. The wearable device is not only a hardware device, but is used to implement a powerful function through software support, a data exchange, and cloud interaction. Generalized wearable intelligent devices include full-featured and large-size devices that can implement all or a part of functions without depending on smartphones, such as smartwatches or smart glasses, and devices that focus on only one type of application and need to work with other devices such as smartphones, such as various smart bands or smart jewelry for monitoring physical signs.

The access network device 10 is an entity that is used in cooperation with the terminal 21 or the terminal 22 and that may be configured to transmit or receive a signal. For example, the access network device 10 may be an access point (Access Point, AP) in a WLAN, an evolved NodeB (evolved NodeB, eNB or eNodeB) in LTE, a relay station, an access point, a vehicle-mounted device, a wearable device, a network device in a future 5G network, or an access network device in a future evolved PLMN network.

In addition, in the embodiments of this application, the access network device provides a service for a cell, and the terminal communicates with the access network device by using a transmission resource (for example, a time domain resource, a frequency domain resource, or a time-frequency resource) used in the cell. The cell may be a cell corresponding to the access network device (for example, a base station). The cell may belong to a macro base station, or may belong to abase station corresponding to a small cell (small cell). The small cell herein may include a metro cell (metro cell), a micro cell (micro cell), a pico cell (Pico cell), a femto cell (femto cell), or the like. These small cells are characterized by small coverage and low transmit power, and are applicable to providing a high-rate data transmission service.

The following describes terms used in the embodiments of this application.

A sidelink (Sidelink, SL) is defined for direct communication between terminals, and is a link through which terminals directly communicate without forwarding by a network device. Generally, one sidelink may include one or more sidelink logical channel groups (Logical Channel Groups, LCGs), and one sidelink logical channel group may include one or more sidelink logical channels (Logical Channels, LCHs).

A sidelink resource is a time-frequency resource used for terminals to directly perform information transmission, or may be a space domain resource used for terminals to directly perform information transmission, or the like.

A Uu buffer status report (Buffer Status Report, BSR) is information sent by the terminal to the access network device, and may be used to request the access network device to allocate an uplink resource to the terminal. The Uu BSR may usually include an amount of data that needs to be transmitted on the uplink. The access network device may allocate an uplink resource of a corresponding size based on the amount of the data.

A sidelink buffer status report (Sidelink Buffer Status Report, SL BSR) is information sent by the terminal to the access network device, and may be used to request the access network device to allocate a sidelink resource to the terminal. The sidelink BSR may usually include an amount of data that needs to be transmitted on the sidelink. The access network device may allocate a sidelink resource of a corresponding size based on the amount of the data.

A scheduling request (Scheduling Request, SR) is another type of information sent by the terminal to the access network device, and may be used to request the access network device to allocate, to the terminal, an uplink resource used to transmit a BSR.

In the embodiments of this application, a V2X service is transmitted on a sidelink resource corresponding to a sidelink, and a Uu service is transmitted on a Uu resource corresponding to a Uu link. In V2X communication, the terminal may obtain the sidelink resource in the following manners.

Manner 1: The terminal obtains the sidelink resource based on a scheduling mode. To be specific, when a connected-mode terminal performing V2X communication needs to transmit information to another terminal on a sidelink, the terminal first needs to send a sidelink buffer status report (Sidelink Buffer Status Report, SL BSR) to the access network device. The SL BSR is used to report an amount of data that the terminal currently needs to transmit on the sidelink, so that the access network device allocates a sidelink resource of an appropriate size based on the amount of the data. Generally, the terminal may send the SL BSR to the network device on the uplink resource. If the terminal currently has no uplink resource to report the SL BSR, a scheduling request (Scheduling Request, SR) may be triggered, where the SR is used to request the access network device to allocate, to the terminal, an uplink resource for sending the SL BSR. After receiving the SR, the access network device allocates an uplink resource grant to the terminal based on a scheduling result, where the uplink resource grant is used for the terminal to send the SL BSR.

Manner 2: The terminal obtains the sidelink resource based on an autonomous mode. To be specific, when a terminal performing sidelink communication needs to transmit information to another terminal or other terminals on a sidelink, the terminal may autonomously select a resource from a resource pool configured or preconfigured by the access network device, so as to transmit the information to the another terminal or other terminals by using the autonomously selected sidelink resource. The resource pool configured by the access network device may be configured based on system information; may be configured based on dedicated signaling after a request that the terminal needs to perform sidelink communication is received; or may be preconfigured.

Manner 3: The terminal obtains the sidelink resource based on a scheduling and autonomous joint mode. To be specific, when a terminal performing sidelink communication needs to transmit information to at least one terminal on a sidelink, the terminal may simultaneously use the method provided in Manner 1 and Manner 2 to obtain the sidelink resource. For example, the terminal requests, in the scheduling mode, a resource used for a service 1, and selects a resource for a service 2 in the autonomous mode.

It should be noted that, in the embodiments of this application, a sidelink of one terminal may be used to transmit data of one or more services, and data of one service may be transmitted on one or more sidelink logical channels. Based on this, the scheduling and autonomous joint mode in the embodiments of this application may be based on a terminal granularity, at a service granularity, at a sidelink logical channel granularity, or at a sidelink logical channel group granularity. The scheduling and autonomous joint mode based on the terminal granularity may be described based on the terminal. If the terminal supports the scheduling and autonomous joint mode, the sidelink resource of the terminal may be obtained in the scheduling mode and/or the autonomous mode, to be specific, the sidelink resource of the terminal may be obtained in the scheduling mode, obtained in the autonomous mode, or obtained in both the scheduling mode and the autonomous mode. The scheduling and autonomous joint mode based on the service granularity may be described based on a service. If a service on a sidelink of the terminal supports the scheduling and autonomous joint mode, the service may be transmitted by using a resource in the scheduling mode or by using a resource selected in a resource mode. The scheduling and autonomous joint mode based on the sidelink logical channel granularity may be described based on a sidelink logical channel. If a sidelink logical channel of the terminal supports the scheduling and autonomous joint mode, data on the sidelink logical channel may use a resource allocated in the scheduling mode, or may use a resource selected in the autonomous mode. The scheduling and autonomous joint mode based on the sidelink logical channel group granularity may be described based on a sidelink logical channel group. If a sidelink logical channel group of the terminal supports the scheduling and autonomous joint mode, data on the sidelink logical channel group may use a resource allocated in the scheduling mode, or may use a resource selected in the autonomous mode.

In this embodiment of this application, if the terminal or a sidelink service of the terminal works in the autonomous mode, a working mode of the terminal or a working mode of the sidelink service of the terminal may be switched from the autonomous mode to the scheduling mode or the scheduling and autonomous joint mode through mode reconfiguration. If the terminal or the sidelink service of the terminal works in the scheduling mode, the working mode of the terminal or the working mode of the sidelink service of the terminal may be switched from the scheduling mode to the autonomous mode or the scheduling and autonomous joint mode through mode reconfiguration. If the terminal or the sidelink service of the terminal works in the scheduling and autonomous joint mode, the working mode of the terminal or the working mode of the sidelink service of the terminal may be switched from the scheduling and autonomous joint mode to the autonomous mode or the scheduling mode through mode reconfiguration.

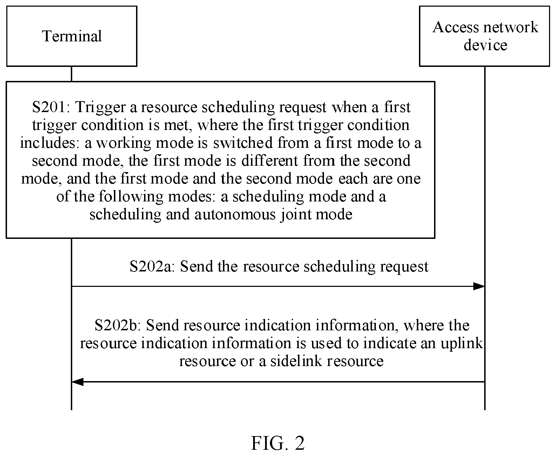

When the working mode of the terminal or the working mode of the sidelink service of the terminal is switched from the autonomous mode to the scheduling mode or the scheduling and autonomous joint mode, is switched from the scheduling mode to the autonomous mode, or is switched from the scheduling and autonomous joint mode to the autonomous mode, the terminal may obtain the sidelink resource in a manner provided in Manner 1, Manner 2, or Manner 3. When the working mode of the terminal or the working mode of the sidelink service of the terminal is switched from the scheduling mode to the scheduling and autonomous joint mode, or is switched from the scheduling and autonomous joint mode to the scheduling mode, the terminal may obtain the sidelink resource by using the method provided in any one of FIG. 2 to FIG. 6 in the following.

FIG. 2 is a schematic flowchart of a resource scheduling method according to an embodiment of this application. The method may be applied to the communication system shown in FIG. 1. Refer to FIG. 2. The method includes the following several steps.

S201: A terminal triggers a resource scheduling request when the terminal meets a first trigger condition, where the resource scheduling request is used to request an access network device to allocate an uplink resource or a sidelink resource to the terminal.

In this embodiment of this application, the first trigger condition includes: A working mode of the terminal or a working mode of a sidelink service of the terminal is switched from a first mode to a second mode. The first mode is different from the second mode, and the first mode and the second mode each are one of the following modes: a scheduling mode and a scheduling and autonomous joint mode.

The terminal or the sidelink service of the terminal works in the first mode before mode switching, and that the access network device may switch the working mode of the terminal or the working mode of the sidelink service of the terminal from the first mode to the second mode through mode reconfiguration may be specifically: switching the working mode of the terminal or the working mode of the sidelink service of the terminal from the scheduling mode to the scheduling and autonomous joint mode, or from the scheduling and autonomous joint mode to the scheduling mode.

In addition, the sidelink service includes any one or more of the following: a sidelink quality of service flow (Sidelink QoS flow), a sidelink logical channel (Sidelink Logical Channel, Sidelink LCH), a sidelink data radio bearer (Sidelink Data Radio Bearer, Sidelink DRB), a sidelink logical channel group (Sidelink Logical Channel Group, Sidelink LCG), a sidelink service target identifier, and a sidelink packet data unit (Sidelink Packet Data Unit, Sidelink PDU) session. The service target identifier may be a destination ID, and the service target identifier usually indicates a type of a specific service message or service data, or indicates a receive terminal or a group of receive terminals.

Specifically, when the first trigger condition includes only: The working mode of the terminal or the working mode of the sidelink service of the terminal is switched from the first mode to the second mode, the terminal may trigger the resource scheduling request. Alternatively, when the first trigger condition further includes another condition in addition to that the working mode of the terminal or the working mode of the sidelink service of the terminal is switched from the first mode to the second mode, the terminal may trigger the resource scheduling request. For details, refer to the following first to third cases.

In a first case, the first trigger condition may be specifically: The working mode of the terminal or the working mode of the sidelink service of the terminal is switched from the first mode to the second mode, and the terminal has no new data. The new data may be data (Data) that is generated by the terminal and that needs to be transmitted on a sidelink after the working mode of the terminal or the working mode of the sidelink service of the terminal is switched from the first mode to the second mode. That the terminal has no new data may be understood as: The terminal does not generate new data that needs to be transmitted on the sidelink, or an amount of available data of the terminal is not increased before and after mode reconfiguration. The available data may be all data that is generated by the terminal and that needs to be transmitted on the sidelink, to be specific, the available data includes data that is generated by the terminal and that needs to be transmitted on the sidelink when the terminal works in the first mode, and also includes new data that is generated by the terminal and that needs to be transmitted on the sidelink after the working mode is switched from the first mode to the second mode. The available data may also be referred to as valid (available) data.

In a second case, the first trigger condition may be specifically: The working mode of the terminal or the working mode of the sidelink service of the terminal is switched from the first mode to the second mode, the terminal has new data corresponding to a first sidelink logical channel, where a priority of the first sidelink logical channel is lower than or equal to a priority of a second sidelink logical channel, and the second sidelink logical channel is a sidelink logical channel corresponding to first data in the available data of the terminal.

That the terminal has new data corresponding to the first sidelink logical channel may be understood as: The terminal generates new data that needs to be transmitted on the first sidelink channel. In addition, the available data may be all data that is generated by the terminal and that needs to be transmitted on the sidelink, to be specific, the available data includes data that is generated by the terminal and that needs to be transmitted on the sidelink when the terminal works in the first mode, and also includes new data that is generated by the terminal and that needs to be transmitted on the sidelink after the working mode is switched from the first mode to the second mode. The available data may also be referred to as valid (available) data.

In a possible embodiment, the first data may be data other than the new data in the available data. For example, the available data includes five data packets, the five data packets are respectively denoted as D1, D2, D3, D4, and D5, and a data packet corresponding to the new data is D1. In this case, data packets corresponding to the data other than the new data are D2, D3, D4, and D5.

In another possible embodiment, the first data may be data that is other than the new data in the available data and that is corresponding to a same target identifier as the new data. The target identifier may be an identifier of a destination. For example, the target identifier may be a layer 2 target identifier of a receive terminal, a group-specific layer 2 target identifier shared by a group of receive terminals, or a service-specific layer 2 target identifier. One target identifier may correspond to a plurality of SL LCHs, and a buffer of each SL LCH may have data.

Alternatively, the priority of the first sidelink logical channel is lower than or equal to priorities of all sidelink logical channels that have available data and that have a same target identifier as the sidelink logical channel in a logical channel group; or the priority of the first sidelink logical channel is lower than or equal to a priority of another sidelink logical channel that has available data and that belongs to a same sidelink logical channel group as the sidelink logical channel.

In a third case, the first trigger condition is specifically: The working mode of the terminal or the working mode of the sidelink service of the terminal is switched from the first mode to the second mode, and a sidelink logical channel that supports the scheduling mode exists in a sidelink logical channel corresponding to the available data of the terminal, or a service corresponding to the available data of the terminal supports the scheduling mode.

The available data may correspond to a plurality of sidelink logical channels. That a sidelink logical channel that supports the scheduling mode exists may mean that at least one sidelink logical channel that supports the scheduling mode exists in the plurality of sidelink logical channels. That is, data on the at least one sidelink logical channel may be multiplexed (that is, loaded) on a sidelink resource obtained by using the scheduling mode, or the at least one sidelink logical channel may trigger a sidelink buffer status report. That a service corresponding to the available data supports the scheduling mode may mean that a resource or resources corresponding to one or more sidelink logical channels that are in the plurality of sidelink logical channels and that are used to transmit data of the service may be obtained in the scheduling mode.

Optionally, in the third case, the first trigger condition may alternatively include a part of conditions in the first or the second case. Specifically, the first trigger condition further includes: The terminal has no new data. Alternatively, the first trigger condition further includes: The terminal has new data corresponding to a first sidelink logical channel, where a priority of the first sidelink logical channel is lower than or equal to a priority of a second sidelink logical channel, and the second sidelink logical channel is a sidelink logical channel corresponding to first data in the available data of the terminal.

S202a: The terminal sends the resource scheduling request to the access network device. When the terminal has a resource available for sending the resource scheduling request, the terminal sends the resource scheduling request to the access network device.

S202b: The access network device sends resource indication information to the terminal, where the resource indication information is used to indicate the uplink resource or the sidelink resource.

When the access network device receives the resource scheduling request, the access network device may allocate the uplink resource or the sidelink resource to the terminal based on the resource scheduling request, and notify the terminal of the uplink resource or the sidelink resource by using the resource indication information.

In this embodiment of this application, there may be two different cases that the resource scheduling request triggered by the terminal to the access network device may be a sidelink buffer status report SL BSR or a scheduling request SR. The following separately describes the two cases.

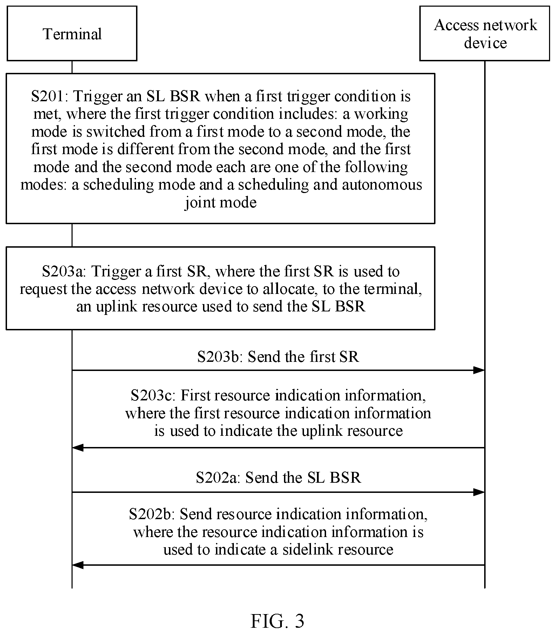

In a case I, as shown in FIG. 3, the resource scheduling request is an SL BSR, and the SL BSR is used to request the access network device to allocate the sidelink resource to the terminal. Correspondingly, S201 may be specifically: The terminal triggers the SL BSR when the terminal meets the first trigger condition. S202a may be specifically: When there is an uplink resource available for sending the SL BSR, the SL BSR is sent to the access network device. S202b may be specifically: The access network device sends the resource indication information to the terminal, where the resource indication information is used to indicate the sidelink resource.

The SL BSR may be triggered by a third sidelink logical channel that meets a first preset condition in a plurality of sidelink logical channels corresponding to the available data, that is, when the terminal meets the first trigger condition (for example, the working mode of the terminal is switched from the first mode to the second mode), the terminal triggers the SL BSR, where the SL BSR is triggered by the third sidelink logical channel.

Optionally, the third sidelink logical channel may be a sidelink logical channel that has a highest priority in logical channels that support the scheduling mode in the plurality of sidelink logical channels. For example, the plurality of sidelink logical channels include three sidelink logical channels, the three sidelink logical channels are respectively denoted as an LCH 1, an LCH 2, and an LCH 3, both the LCH 1 and the LCH 2 support the scheduling mode, and a priority of the LCH 1 is higher than a priority of the LCH 2. In this case, the third sidelink logical channel is the LCH 1.

Alternatively, the third sidelink logical channel may be a sidelink logical channel whose working mode is switched from the first mode to the second mode in the plurality of sidelink logical channels. For example, the plurality of sidelink logical channels include three sidelink logical channels, the three sidelink logical channels are respectively denoted as an LCH 1, an LCH 2, and an LCH 3, and working modes of the LCH 1 and the LCH 2 are switched from the first mode to the second mode. In this case, the third sidelink logical channel may be the LCH 1 or the LCH 2.

Alternatively, the third sidelink logical channel may be a sidelink logical channel that has a highest priority in sidelink logical channels whose working modes are switched from the first mode to the second mode in the plurality of sidelink logical channels. For example, the plurality of sidelink logical channels include three sidelink logical channels, the three sidelink logical channels are respectively denoted as the LCH 1, the LCH 2, and the LCH 3, working modes of the LCH 1, the LCH 2, and the LCH 3 are switched from the first mode to the second mode, and the LCH 1 has a highest priority. In this case, the third sidelink logical channel may be the LCH 1.

Alternatively, the third sidelink logical channel may be a sidelink logical channel that supports the scheduling mode in the plurality of sidelink logical channels. For example, the plurality of sidelink logical channels include three sidelink logical channels, the three sidelink logical channels are respectively denoted as an LCH 1, an LCH 2, and an LCH 3, and the LCH 1 supports the scheduling mode. In this case, the third sidelink logical channel is the LCH 1.

In addition, the SL BSR may be a regular (regular) SL BSR. In this embodiment of this application, when the BSR is a regular BSR, as shown in FIG. 3, before the terminal sends the resource scheduling request, the method may further include S203a to S203c.

S203a: The terminal triggers a first SR, where the first SR is used to request the access network device to allocate, to the terminal, the uplink resource used to send the BSR.

S203b: The terminal sends the first SR to the access network device.

Specifically, when the terminal meets the first trigger condition, but the terminal does not have the uplink resource used to send the SL BSR, the terminal may trigger the first SR; and when an SR resource is available, the terminal sends the first SR to the access network device, to request the access network device to allocate the uplink resource used to send the BSR, where the SR resource is a resource used to send the first SR.

S203c: When the access network device receives the first SR, the access network device sends first resource indication information to the terminal, where the first resource indication information is used to indicate the uplink resource.

When the access network device receives the first SR, the access network device may allocate, to the terminal, the uplink resource used to send the SL BSR, and notify the terminal of the uplink resource by using the first resource indication information. Further, when the terminal receives the first resource indication information, the terminal may send, according to S201, the BSR to the access network device on the uplink resource indicated by the first resource indication information.

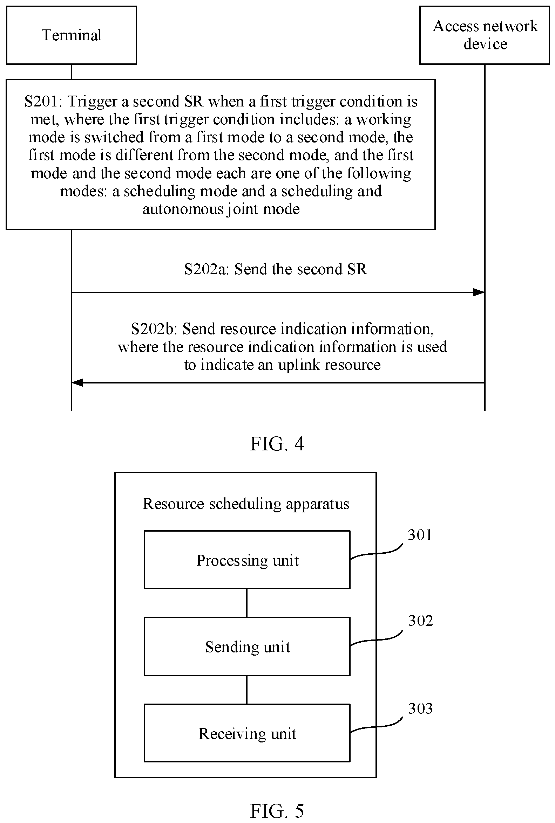

In a case II, as shown in FIG. 4, the resource scheduling request is a second SR, and the second SR is used to request the access network device to allocate the uplink resource to the terminal, where the uplink resource is used to send the SL BSR.

Correspondingly, S201 may be specifically: The terminal triggers the second SR when the terminal meets the first trigger condition. S202a is specifically: When an SR resource is available, the terminal sends the second SR to the access network device. S202b may be specifically: The access network device sends the resource indication information to the terminal, where the resource indication information is used to indicate the uplink resource.

Specifically, when the terminal meets the first trigger condition, the terminal may trigger the second SR, and when there is an available SR resource, the terminal sends the second SR to the access network device. When the access network device receives the second SR, the access network device may allocate the uplink resource to the terminal, and notify the terminal of the uplink resource by using the resource indication information. Then, the terminal may send the SL BSR to the access network device on the uplink resource. When receiving the SL BSR, the access network device may send indication information of the sidelink resource to the terminal, so that the terminal determines the sidelink resource based on the indication information.

The second SR may be associated with a fourth sidelink logical channel in a plurality of sidelink logical channels. When the terminal meets the first trigger condition (for example, the working mode of the terminal is switched from the first mode to the second mode), the terminal triggers the second SR, where the second SR is associated with the fourth sidelink logical channel. In this case, the second SR uses an SR configuration and an SR resource that are associated with the fourth sidelink logical channel. Optionally, the fourth sidelink logical channel may be a sidelink logical channel that has a highest priority and that is associated with the SR configuration in logical channels that support the scheduling mode in the plurality of sidelink logical channels. For example, the plurality of sidelink logical channels include three sidelink logical channels associated with the SR configuration, the three sidelink logical channels are respectively denoted as an LCH 1, an LCH 2, and an LCH 3, both the LCH 1 and the LCH 2 support the scheduling mode, and a priority of the LCH 1 is higher than a priority of the LCH 2. In this case, the fourth sidelink logical channel is the LCH 1.

Alternatively, the fourth sidelink logical channel may be a sidelink logical channel that has a highest priority and that supports the scheduling mode in the plurality of sidelink logical channels. For example, the plurality of sidelink logical channels include three sidelink logical channels, the three sidelink logical channels are respectively denoted as an LCH 1, an LCH 2, and an LCH 3, both the LCH 1 and the LCH 2 support the scheduling mode, and a priority of the LCH 1 is higher than a priority of the LCH 2. In this case, the fourth sidelink logical channel is the LCH 1. If the LCH 1 is associated with the SR configuration, the second SR is triggered; or if the LCH 1 is not associated with the SR configuration, random access is initiated.

Alternatively, the fourth sidelink logical channel may be a sidelink logical channel whose working mode is switched from the first mode to the second mode and that is associated with the SR configuration in the plurality of sidelink logical channels. For example, the plurality of sidelink logical channels include three sidelink logical channels, the three sidelink logical channels are respectively denoted as an LCH 1, an LCH 2, and an LCH 3, and working modes of the LCH 1 and the LCH 2 are switched from the first mode to the second mode. In this case, the fourth sidelink logical channel may be the LCH 1 or the LCH 2.

Alternatively, the fourth sidelink logical channel may be a sidelink logical channel whose working mode is switched from the first mode to the second mode in the plurality of sidelink logical channels. For example, the plurality of sidelink logical channels include three sidelink logical channels, the three sidelink logical channels are respectively denoted as an LCH 1, an LCH 2, and an LCH 3, and working modes of the LCH 1 and the LCH 2 are switched from the first mode to the second mode. In this case, the fourth sidelink logical channel may be the LCH 1 or the LCH 2. If the fourth sidelink logical channel is associated with the SR configuration, the second SR is triggered; or if the fourth sidelink logical channel is not associated with the SR configuration, random access is initiated.

Alternatively, the fourth sidelink logical channel may be a sidelink logical channel that is associated with the SR configuration and that has a highest priority in sidelink logical channels whose working mode are switched from the first mode to the second mode in the plurality of sidelink logical channels. For example, the plurality of sidelink logical channels include three sidelink logical channels associated with the SR configuration, the three sidelink logical channels are respectively denoted as an LCH 1, an LCH 2, and an LCH 3, working modes of the LCH 1, the LCH 2, and the LCH 3 are switched from the first mode to the second mode, and the LCH 1 has a highest priority. In this case, the fourth sidelink logical channel may be the LCH 1.

Alternatively, the fourth sidelink logical channel may be a sidelink logical channel that has a highest priority in sidelink logical channels whose working modes are switched from the first mode to the second mode in the plurality of sidelink logical channels. For example, the plurality of sidelink logical channels include three sidelink logical channels associated with the SR configuration, the three sidelink logical channels are respectively denoted as an LCH 1, an LCH 2, and an LCH 3, working modes of the LCH 1, the LCH 2, and the LCH 3 are switched from the first mode to the second mode, and the LCH 1 has a highest priority. In this case, the fourth sidelink logical channel may be the LCH 1. If the fourth sidelink logical channel is associated with the SR configuration, the second SR is triggered; or if the fourth sidelink logical channel is not associated with the SR configuration, random access is initiated.

In the resource scheduling method provided in this embodiment of this application, when the terminal meets the first trigger condition, the terminal triggers the resource scheduling request, and when there is an available uplink resource or SR resource, the terminal sends the resource scheduling request to the access network device, that is, sends the resource scheduling requirement of the terminal to the access network device. The access network device may properly allocate the uplink resource used to request the sidelink resource or the sidelink resource to the terminal based on the resource scheduling request. This resolves a problem of how the terminal obtains the sidelink resource when the mode of the terminal is reconfigured. In addition, after obtaining the sidelink resource, the terminal may transmit sidelink data by using the sidelink resource. This reduces a transmission delay of a service on the sidelink.

The foregoing mainly describes the solutions provided in the embodiments of this application from a perspective of interaction between network elements. It may be understood that the network elements are, for example, the terminal and the access network device. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the terminal may be divided into function modules based on the foregoing method example. For example, function modules corresponding to the functions may be obtained through division, or two or more functions may be integrated into one module. The integrated module may be implemented in a form of hardware, or may be implemented in a form of a software functional module. It should be noted that in the embodiments of this application, division into modules is an example and is merely logical function division, and there may be another division manner during actual implementation. An example in which each function module is obtained through division based on each corresponding function is used below for description.

When an integrated unit is used, FIG. 5 is a possible schematic diagram of a structure of a resource scheduling apparatus in the foregoing embodiments. The apparatus may be a terminal or a chip built in the terminal, and the apparatus includes a processing unit 301, a sending unit 302, and a receiving unit 303. The processing unit 301 is configured to support the apparatus in performing the foregoing step of processing information at the terminal; the sending unit 302 is configured to indicate the apparatus to send information to an access network device; and the receiving unit 303 supports the apparatus in performing the foregoing step of receiving information from the access network device.

In a feasible embodiment, the processing unit 301 is configured to support the apparatus in performing the foregoing steps S201 and S203a; the sending unit 302 is configured to support the apparatus in performing S202a and S203b; and the receiving unit 303 is configured to support the apparatus in performing the foregoing step of receiving the first resource indication information sent in S203c, the step of receiving the resource indication information sent in S202b, and/or another process of the technology described in this specification.

It should be noted that all related content of the steps in the foregoing method embodiments may be cited in function descriptions of corresponding function modules. Details are not described herein again.

Based on hardware implementation, the processing unit 301 in this application may be a processor of the resource scheduling apparatus, the sending unit 302 may be a transmitter of the apparatus, and the receiving unit 303 may be a receiver of the apparatus. The transmitter and the receiver may be usually integrated together to serve as a transceiver. Specifically, the transceiver may also be referred to as a communication interface.

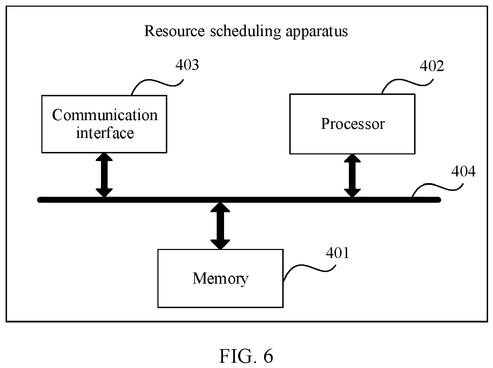

FIG. 6 is a possible schematic diagram of a logical structure of the resource scheduling apparatus in the foregoing embodiment according to an embodiment of this application. The apparatus may be a terminal or a chip built in the terminal, and the apparatus includes a processor 402 and a communication interface 403. The processor 402 is configured to control and manage an action of the apparatus. In a feasible embodiment, the processor 402 is configured to support the apparatus in performing the foregoing steps S201 and S203a. In addition, the apparatus may further include a memory 401 and a bus 404. The processor 402, the communication interface 403, and the memory 401 are connected to each other through the bus 404. The communication interface 403 is configured to support the apparatus in performing communication, for example, support the apparatus in performing communication with an access network device. The memory 401 is configured to store program code and data of the apparatus.

The processor 402 may be a central processing unit, a general-purpose processor, a baseband processor, a digital signal processor, an application-specific integrated circuit, a field programmable gate array or another programmable logic device, a transistor logic device, a hardware component, or any combination thereof. The processor 402 may implement or execute various example logical blocks, modules, and circuits described with reference to content disclosed in this application. Alternatively, the processor may be a combination implementing computing functions, for example, a combination of one or more microprocessors, or a combination of a digital signal processor and a microprocessor. The bus 404 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, or the like. For ease of representation, only one thick line is used to represent the bus in FIG. 6, but this does not mean that there is only one bus or only one type of bus.

In the several embodiments provided in this application, it should be understood that the disclosed apparatus and method may be implemented in another manner. For example, the described apparatus embodiments are merely examples. For example, division into modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, and may be located in one place, or may be distributed in different places. A part or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or a part contributing to the prior art, or all or a part of the technical solutions may be implemented in a form of a software product.

In another embodiment of this application, a readable storage medium is further provided. The readable storage medium stores computer-executable instructions. When a device (which may be a single chip microcomputer, a chip, or the like) or a processor performs steps of the terminal in the foregoing method embodiments. The foregoing readable storage medium may include: any medium that can store program code, such as a USB flash drive, a removable hard disk, a read-only memory, a random access memory, a magnetic disk, or an optical disc.

In another embodiment of this application, a computer program product is further provided. The computer program product includes computer-executable instructions. The computer-executable instructions are stored in a computer-readable storage medium. At least one processor of a device may read the computer-executable instructions from the computer-readable storage medium. The at least one processor executes the computer-executable instructions, so that the device performs the steps of the terminal in the foregoing method embodiments.

Finally, it should be noted that the foregoing descriptions are merely specific implementations of this application. However, the protection scope of this application is not limited thereto. Any variation or replacement within the technical scope disclosed in this application shall fall within the protection scope of this application. Therefore, the protection scope of this application shall be subject to the protection scope of the claims.

## Claims

1. A resource scheduling method, wherein the method comprises:
triggering, by a terminal, a resource scheduling request when the terminal meets a first trigger condition, wherein the resource scheduling request is used to request an access network device to allocate an uplink resource or a sidelink resource to the terminal; and the first trigger condition comprises: a working mode of the terminal or a working mode of a sidelink service of the terminal is switched from a first mode to a second mode, wherein the first mode is different from the second mode, and the first mode and the second mode each are one of the following modes: a scheduling mode and a scheduling and autonomous joint mode.

2. The method according to claim 1, wherein the first trigger condition further comprises: the terminal has no new data.

3. The method according to claim 1, wherein the first trigger condition further comprises: the terminal has new data corresponding to a first sidelink logical channel, wherein a priority of the first sidelink logical channel is lower than or equal to a priority of a second sidelink logical channel, and the second sidelink logical channel is a sidelink logical channel corresponding to first data in available data of the terminal.

4. The method according to claim 3, wherein the first data is data other than the new data in the available data; the first data is data that is other than the new data in the available data and that is corresponding to a same target identifier as the new data; or the first data is data that is other than the new data in the available data and that is corresponding to a same sidelink logical channel group as the new data.

5. The method according to any one of claims 1 to 4, wherein the sidelink service comprises any one or more of the following:
a sidelink quality of service flow, a sidelink logical channel LCH, a sidelink data radio bearer DRB, a sidelink logical channel group LCG, a sidelink service target identifier, and a sidelink packet data unit session.

6. The method according to any one of claims 1 to 5, wherein the first trigger condition further comprises: a sidelink logical channel that supports the scheduling mode exists in a sidelink logical channel corresponding to the available data of the terminal, or a service corresponding to the available data of the terminal supports the scheduling mode.

7. The method according to any one of claims 1 to 6, wherein the resource scheduling request is a sidelink buffer status report, and the sidelink buffer status report is used to request the access network device to allocate the sidelink resource to the terminal.

8. The method according to claim 7, wherein the sidelink buffer status report is triggered by a third sidelink logical channel that meets a first preset condition in a plurality of sidelink logical channels corresponding to the available data of the terminal.

9. The method according to claim 8, wherein the first preset condition comprises: the third sidelink logical channel supports the scheduling mode, and/or a priority of the third sidelink logical channel is higher than a priority of another sidelink logical channel that supports the scheduling mode in the plurality of sidelink logical channels; or
the third sidelink logical channel is a sidelink logical channel whose working mode is switched from the first mode to the second mode in the plurality of sidelink logical channels.

10. The method according to any one of claims 7 to 9, wherein the method further comprises:
triggering, by the terminal, a first scheduling request, wherein the first scheduling request is used to request the access network device to allocate, to the terminal, an uplink resource used to send the sidelink buffer status report.

11. The method according to claim 10, wherein the sidelink buffer status report is a regular buffer status report.

12. The method according to any one of claims 1 to 6, wherein the resource scheduling request is a second scheduling request, and the second scheduling request is used to request the access network device to allocate the uplink resource to the terminal.

13. A resource scheduling apparatus, wherein the apparatus comprises:
a processing unit, configured to trigger a resource scheduling request when a first trigger condition is met, wherein the resource scheduling request is used to request an access network device to allocate an uplink resource or a sidelink resource to the apparatus; and the first trigger condition comprises: a working mode of the apparatus or a working mode of a sidelink service of the apparatus is switched from a first mode to a second mode, wherein the first mode is different from the second mode, and the first mode and the second mode each are one of the following modes: a scheduling mode and a scheduling and autonomous joint mode.

14. The apparatus according to claim 13, wherein the first trigger condition further comprises: the apparatus has no new data.

15. The apparatus according to claim 13, wherein the first trigger condition further comprises: the apparatus has new data corresponding to a first sidelink logical channel, wherein a priority of the first sidelink logical channel is lower than or equal to a priority of a second sidelink logical channel, and the second sidelink logical channel is a sidelink logical channel corresponding to first data in available data of the apparatus.

16. The apparatus according to claim 15, wherein the first data is data other than the new data in the available data; the first data is data that is other than the new data in the available data and that is corresponding to a same target identifier as the new data; or the first data is data that is other than the new data in the available data and that is corresponding to a same sidelink logical channel group as the new data.

17. The apparatus according to any one of claims 13 to 16, wherein the sidelink service comprises any one or more of the following:
a sidelink quality of service flow, a sidelink logical channel LCH, a sidelink data radio bearer DRB, a sidelink logical channel group LCG, a sidelink service target identifier, and a sidelink packet data unit session.

18. The apparatus according to any one of claims 13 to 17, wherein the first trigger condition further comprises:
a sidelink logical channel that supports the scheduling mode exists in a sidelink logical channel corresponding to the available data of the apparatus, or a service corresponding to the available data of the apparatus supports the scheduling mode.

19. The apparatus according to any one of claims 13 to 18, wherein the resource scheduling request is a sidelink buffer status report, and the sidelink buffer status report is used to request the access network device to allocate the sidelink resource to the apparatus.

20. The apparatus according to claim 19, wherein the sidelink buffer status report is triggered by a third sidelink logical channel that meets a first preset condition in a plurality of sidelink logical channels corresponding to the available data of the apparatus.

21. The apparatus according to claim 20, wherein the first preset condition comprises: the third sidelink logical channel supports the scheduling mode, and/or a priority of the third sidelink logical channel is higher than a priority of another sidelink logical channel that supports the scheduling mode in the plurality of sidelink logical channels; or
the third sidelink logical channel is a sidelink logical channel whose working mode is switched from the first mode to the second mode in the plurality of sidelink logical channels.

22. The apparatus according to any one of claims 19 to 21, wherein the processing unit is further configured to:
trigger a first scheduling request, wherein the first scheduling request is used to request the access network device to allocate, to the apparatus, an uplink resource used to send the sidelink buffer status report.

23. The apparatus according to claim 22, wherein the sidelink buffer status report is a regular buffer status report.

24. The apparatus according to any one of claims 13 to 18, wherein the resource scheduling request is a second scheduling request, and the second scheduling request is used to request the access network device to allocate the uplink resource to the apparatus.

25. A resource scheduling apparatus, wherein the apparatus is a terminal or a chip built in the terminal; and the apparatus comprises a processor and a memory, wherein the processor is configured to run instructions in the memory, so that the apparatus performs the resource scheduling method according to any one of claims 1 to 12.

26. A computer-readable storage medium, wherein the computer-readable storage medium stores instructions, and when the instructions are run on a device, the device is enabled to perform the resource scheduling method according to any one of claims 1 to 12.

27. A computer program product, wherein when the computer program product runs on a device, the device is enabled to perform the resource scheduling method according to any one of claims 1 to 12.
